(19) Europäisches Patentamt
European Patent Office
Office européen des brevets

(11) **EP 1 580 976 A2**

(12) **EUROPEAN PATENT APPLICATION**

(43) Date of publication:
28.09.2005 Bulletin 2005/39

(51) Int Cl.⁷: **H04N 1/00**

(21) Application number: 05251571.5

(22) Date of filing: 16.03.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: 19.03.2004 JP 2004080637

(71) Applicant: **Ricoh Company, Ltd.**
**Tokyo 143-8555 (JP)**

(72) Inventors:
• **Ohyama, Maki**
**Ohta-ku Tokyo 143-8555 (JP)**
• **Kawamoto, Hiroyuki**
**Ohta-ku Tokyo 143-8555 (JP)**
• **Ohkawa, Satoshi**
**Ohta-ku Tokyo 143-8555 (JP)**
• **Sugiyama, Naoki Obu-shataku, Room 711**
**Obu-city Aichi Prefecture 474-0011 (JP)**

• **Hiroshi, Arai**
**Ohta-ku Tokyo 143-8555 (JP)**
• **Shirata, Yasunobu**
**Ohta-ku Tokyo 143-8555 (JP)**
• **Togami, Atsushi**
**Ohta-ku Tokyo 143-8555 (JP)**
• **Tone, Takeharu**
**Ohta-ku Tokyo 143-8555 (JP)**
• **Nishita, Taira Kuresanto-shoin Room 105**
**Setagaya-ku Tokyo 154-0023 (JP)**
• **Miyamoto, Isao**
**Ohta-ku Tokyo 143-8555 (JP)**

(74) Representative: **Leeming, John Gerard**
**J.A. Kemp & Co.,**
**14 South Square,**
**Gray's Inn**
**London WC1R 5JJ (GB)**

(54) **Image processing apparatus, image data generation and transmission method and image data generation and transmission program**

(57) An image processing apparatus connected to an external apparatus via a network includes an input unit for inputting process mode information, a scanning unit for scanning an original document, a scanning correction unit for generating image data from the scanned document, a storage unit for storing the image data and the process mode information, a compression unit for compressing the image data, an extension unit for extending the compressed image data, a data format converting unit for converting a data format of the image data according to the process mode information, and a communication unit for communicating the image data with the external apparatus. The data format converting unit receives image data having a first data format, and outputs the image data having a second data format, wherein the first and second data format includes a data format dedicated to the image processing apparatus and a general data format.

FIG. 5

**Description**

The present invention relates to an image processing apparatus configured to process an image of a scanned original document to generate image data, an image data generation and transmission method, and an image data generation and transmission program.

A networked scanning system including digital-processing apparatuses (e.g., digital copier and image scanning apparatus) connected to a network is publicly known. In such networked scanning system, scan devices included in the digital-processing apparatuses scan original document images, and the scanned image data can be transmitted to terminal apparatuses (e.g., personal computer) connected to the network.

A background art uses an extension box compatible to the architecture of a mainframe computer system. In such background art, an image input unit of an image forming apparatus scans an image, and then the scanned image data is stored in a hard disk unit (i.e., scan box) in the extension box. The background art is configured to share the image data with a plurality of terminal apparatuses (e.g., personal computers) connected to a network.

In this background art, an image is processed as below.

At first, scan parameters such as resolution, grayscale, magnification, to-be-scanned face, image size, to-be-stored area are selected before scanning a document image. The scanned image data is transmitted to an image processing unit to process the scanned data image with the selected scan parameters.

However, this background art has omitted color coordinate conversion (i.e., from the R(red), G(green), and B(blue) system to the C(cyan), M(magenta), Y(yellow), and K(black) system), grayscale correction, and image data compression process because this background art does not require generating data format for printout, in other words, this background art is not intended to printout images.

The processed image data is then transmitted to the extension box. In the extension box, the image data is stored in the scan box allocated to a predetermined disk area in the hard disk unit.

After accumulating all image data for the original document image in the scan box, a client apparatus connected to the network retrieves the image data from the scan box.

However, this background art uses one data format for image data for copying-purpose and another format for image data for transmission-purpose.

Therefore, even when a same digital image processing apparatus is used for producing printout, respective printouts made from the same image data having such different data formats may be different.

Furthermore, in this background art, a user pushes a copy button to copy a document, and pushes a scan button to scan an image to be transmitted later.

Therefore, the user needs to scan the same document twice when the user wants to copy and transmit the same document. The user may feel inconvenience for such an unfriendly operation.

In addition, this background art may employ a special format for image data stored in the hard disk unit, and a special data compression algorithm to economize memory area.

Therefore, the user cannot review and edit such image data with publicly-available applications when the user receives the image data with an external client apparatus.

Another background art discloses a method of controlling multi-functions such as copying, scanning, printing, and facsimile function.

This other background art scans a document image, generates image data, prepares attribute data from the image data, and stores the image data and the corresponding attribute data for each pixel in an image-storing unit.

When transmitting the image data to an external client apparatus, the image data is converted to a predetermined data format.

This other background art does not store process mode information, selected by an operation panel, in the hard disk unit.

Therefore, when the image data stored in the hard disk unit is transmitted to an external client apparatus, the image data is converted to a data format independent from the process mode information selected by the operation panel.

Furthermore, this other background art needs to manage a number of attribute information in addition to image data. Therefore, this other background art leads to an increase of complexity of the system.

The present invention provides an image processing apparatus connected to an external apparatus via a network.

In one exemplary embodiment, a novel image processing apparatus connected to an external apparatus via a network includes an input unit, a scanning unit, a scanning correction unit, a storage unit, a compression unit, an extension unit, a data format converting unit, and a communication unit. The selection unit selects an application mode and an image quality mode. The scanning unit scans an original document to generate predetermined image signals. The scanning correction unit generates image data by conducting a first predetermined image processing to the predetermined image signals. The storage unit stores the image data and the application mode and the image quality mode. The compression unit compresses the image data when storing the image data to the storage unit. The extension unit extends the compressed image data. The data format converting unit converts a data format of the image data according to the application mode and the image quality mode. The communication unit communicates the image data with the external apparatus.

In the above-mentioned image processing apparatus, the data format converting unit includes a data extension unit configured to extend the compressed image data, an image processing unit configured to conduct a second predetermined image processing to the extended image data, and a data compression unit configured to compress the extended image data.

In the above-mentioned image processing apparatus, the data format converting unit receives image data having a first data format, and outputs the image data having a second data format, wherein the first data format includes a data format dedicated to the image processing apparatus and a general data format, and the second data format includes a data format dedicated to the image processing apparatus and a general data format.

In the above-mentioned image processing apparatus, the data format converting unit includes a resolution converting unit configured to convert a resolution level of image data, input to the data format converting unit.

In the above-mentioned image processing apparatus, the data format converting unit includes a color-space conversion unit configured to convert a color space of image data, input to the data format converting unit, to another color space that is independent from characteristics of the image processing apparatus.

In the above-mentioned image processing apparatus, the data format converting unit includes a monochrome converting unit configured to convert color image data, input to the data format converting unit, to monochrome image data.

In the above-mentioned image processing apparatus, the data format converting unit includes a spot noise elimination unit configured to conduct a spot noise elimination process to image data, input to the data format converting unit.

In the above-mentioned image processing apparatus, the data format converting unit includes a filtering unit configured to conduct a predetermined filtering process to image data, input to the data format converting unit.

In the above-mentioned image processing apparatus, the data format converting unit includes a concentration gamma processing unit configured to conduct a predetermined concentration gamma processing to image data, input to the data format converting unit.

In the above-mentioned image processing apparatus, the data format converting unit includes a binary-format processing unit configured to convert multi-value image data, input to the data format converting unit, to binary-formatted image data.

In the above-mentioned image processing apparatus, the data format converting unit further conducts image processing to image data, input to the data format converting unit, according to an application mode and an image quality mode designated by the external apparatus and received by the data format converting unit via the communication unit.

In one exemplary embodiment, a novel method of image data generation and transmission conducted in an image processing apparatus connected to an external apparatus via a network includes the steps of setting, scanning, correcting, storing, converting, transmitting. The selecting step selects an application mode and an image quality mode. The scanning step scans an original document to generate predetermined image signals. The correcting step correct the predetermined image signals to obtain image data. The storing step stores the image data, the application and the image quality mode. The converting step converts an attribute of the image data according to the process mode information. The transmitting step transmits the image data converted in the converting step to the external apparatus.

The above-mentioned method of image data generation and transmission further includes the steps of scanning, correcting, storing, requesting, designating, converting, and transmitting. The scanning step scans an original document to generate predetermined image signals. The correcting step corrects the predetermined image signals to obtain image data. The storing step stores the image data. The requesting step requests an acquisition of the image data from the external apparatus. The designating step designates an application mode and an image quality mode for the acquisition requested image data from the external apparatus. The converting step converts an attribute of the image data according to the process mode information designated in the designating step. The transmitting step transmits the image data converted in the converting step to the external apparatus.

In the above-mentioned method of image data generation and transmission, the converting step includes a data extension unit configured to extend the compressed image data, an image processing unit configured to conduct a second predetermined image processing to the extended image data, and a data compression unit configured to compress the extended image data.

In the above-mentioned method of image data generation and transmission, the converting step receives image data having a first data format, and outputs the image data having a second data format, wherein the first data format includes a data format dedicated to the image processing apparatus and a general data format, and the second data format includes a data format dedicated to the image processing apparatus and a general data format.

In the above-mentioned method of image data generation and transmission, the converting step converts an attribute of the image data stored in the storing step according to the application mode and the image quality mode selected in the selecting step.

In the above-mentioned method of image data generation and transmission, the converting step converts an attribute of the image data stored in the storing step according to the application mode and the image quality mode designated from the external apparatus in the designating step.

In the above-mentioned method of image data generation and transmission, the converting step further includes the steps of extending, altering, changing, and compressing. The extending step extends compressed image data. The altering step alters resolution of the extended image data. The changing step changes a color space of the resolution-altered image data to another color space that is independent from characteristics of the image processing apparatus. The compressing step compresses the image data having the another color space.

In the above-mentioned method of image data generation and transmission, the converting step further includes the steps of extending, altering, changing, eliminating, filtering, gamma-processing, binary-formatting, and compressing. The extending step extends compressed image data. The altering step alters resolution of the extended image data. The changing step changes the resolution-altered image data to monochrome image data. The eliminating step eliminates a spot noise from the monochrome image data. The filtering step filters the monochrome image data. The gamma-processing step conducts gamma-processing to the monochrome image data. The binary-formatting step formats the monochrome image data in binary-format. The compressing step compresses the binary-formatted monochrome image data.

In one exemplary embodiment, a novel image data generation and transmission program including computer-readable instructions that, when executed by a computer of an image processing apparatus connected to an external apparatus via a network, instructs the image processing apparatus to carry out a method of image data generating and transmitting, wherein the image data generation and transmission program includes the steps of setting, scanning, correcting, storing, converting, transmitting. The selecting step selects an application mode and an image quality mode. The scanning step scans an original document to generate predetermined image signals. The correcting step correct the predetermined image signals to obtain image data. The storing step stores the image data, the application mode and the image quality mode. The converting step converts an attribute of the image data according to the application mode and image quality mode. The transmitting step transmits the image data converted in the converting step to the external apparatus.

The above-mentioned image data generation and transmission program further includes the steps of scanning, correcting, storing, requesting, designating, converting, and transmitting. The scanning step scans an original document to generate predetermined image signals. The correcting step corrects the predetermined image signals to obtain image data. The storing step stores the image data. The requesting step requests an acquisition of the image data from the external apparatus. The designating step designates an application mode and an image quality mode for the acquisition requested image data from the external apparatus. The converting step converts an attribute of the image data according to the application mode and the image quality mode designated in the designating step. The transmitting step transmits the image data converted in the converting step to the external apparatus.

In the above-mentioned image data generation and transmission program, the computer-readable instructions are stored in a computer-readable medium provided in the image processing apparatus.

In the above-mentioned image data generation and transmission program, the computer-readable instructions are downloaded from the network.

In one exemplary embodiment, a computer-readable medium storing an image data generation and transmission program including computer-readable instructions that, when executed by a computer of an image forming apparatus connected to an external apparatus via a network, instructs the image forming apparatus to carry out a method of image data generating and transmitting, wherein the image data generation and transmission program includes the steps of setting, scanning, correcting, storing, converting, transmitting. The selecting step sets an application mode and a picture quality mode. The scanning step scans an original document to generate predetermined image signals. The correcting step correct the predetermined image signals to obtain image data. The storing step stores the image data and the application mode and picture quality mode. The converting step converts an attribute of the image data according to the application mode and picture quality mode. The transmitting step transmits the image data converted in the converting step to the external apparatus.

In the above-mentioned computer-readable medium storing the image data generation and transmission program, the image data generation and transmission program further includes the steps of scanning, correcting, storing, requesting, designating, converting, and transmitting. The scanning step scans an original document to generate predetermined image signals. The correcting step corrects the predetermined image signals to obtain image data. The storing step stores the image data. The requesting step requests an acquisition of the image data from the external apparatus. The designating step designates process mode information for the acquisition requested image data from the external apparatus. The converting step converts an attribute of the image data according to the process mode information designated in the designating step. The transmitting step transmits the image data converted in the converting step to the external apparatus.

A more complete appreciation of the disclosure and many of the attendant advantages and features thereof can readily be obtained and understood from the following detailed description of exemplary embodiments and the accompanying drawings, wherein:

FIG. 1 is an exemplary block diagram illustrating a configuration of an image processing apparatus according to an exemplary embodiment of the present invention;

FIG. 2 is an exemplary block diagram illustrating a configuration for a scanning correction unit according to an exemplary embodiment of the present invention;

FIG. 3 is an exemplary operation panel provided to an image processing apparatus according to an exemplary embodiment of the present invention;

FIG. 4 is an exemplary block diagram illustrating a configuration for a printing correction unit according to an exemplary embodiment of the present invention.

FIG. 5 is an exemplary block diagram illustrating a transmission of image data stored in a hard disk of an image processing apparatus to an external apparatus according to an exemplary embodiment of the present invention;

FIG. 6 is an exemplary block diagram illustrating a data format converter provided to an image processing apparatus according to an exemplary embodiment of the present invention;

FIG. 7 is an exemplary block diagram illustrating a data format conversion by a data format converter according to an exemplary embodiment of the present invention;

FIG. 8 is an exemplary block diagram illustrating another data format conversion by another data format converter according to an exemplary embodiment of the present invention;

FIG. 9 is an exemplary block diagram illustrating another data format conversion by another data format converter according to an exemplary embodiment of the present invention;

FIG. 10A is an exemplary block diagram illustrating a resolution converter according to an exemplary embodiment of the present invention;

FIG. 10B is an exemplary block diagram illustrating a resolution converting block for main scanning direction according to an exemplary embodiment of the present invention;

FIG. 10C is an exemplary block diagram illustrating a resolution converting block for sub-scanning direction according to an exemplary embodiment of the present invention;

FIG. 11 is an exemplary schematic view for explaining a color-space conversion by a color-space converter according to an exemplary embodiment of the present invention;

FIG. 12 is an exemplary flow chart illustrating steps for image data generation and transmission according to an exemplary embodiment of the present invention;

FIG. 13 is an exemplary flow chart illustrating steps for image data format conversion according to an exemplary embodiment of the present invention;

FIG. 14 is an exemplary block diagram illustrating a data format converter provided to another image processing apparatus according to another exemplary embodiment of the present invention;

FIG. 15 is an exemplary block diagram illustrating another data format converter, which has modified the data format converter in FIG. 14;

FIG. 16 is an exemplary matrix for a spot noise elimination process; and

FIG. 17 is an exemplary configuration explaining image data transmission from an image processing apparatus to external personal computers.

In describing exemplary embodiments illustrated in the drawings, specific terminology is employed for the sake of clarity. However, the disclosure of this present invention is not intended to be limited to the specific terminology so selected and it is to be understood that each specific element includes all technical equivalents that operate in a similar manner.

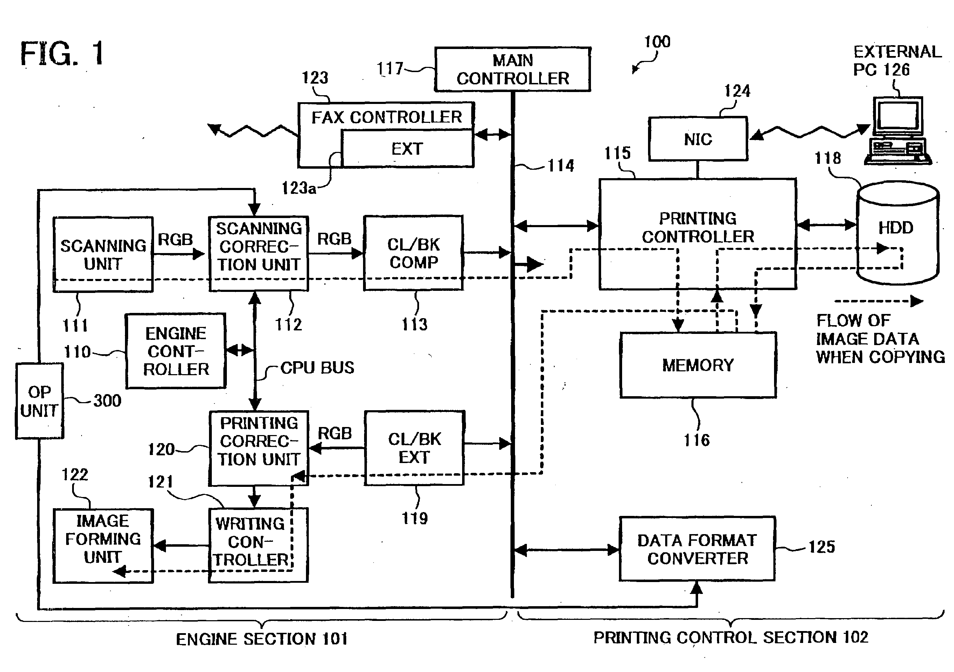

Referring now to the drawings, wherein like reference numerals designate identical or corresponding parts throughout the several views, and more particularly to FIG. 1 thereof, an exemplary block diagram illustrating a configuration of an image processing apparatus according to an exemplary embodiment of the present invention is described.

FIG. 1 shows an image processing apparatus 100 used as a multi-functional apparatus including copying and printing function, for example.

With reference to FIG. 1, each section of the image processing apparatus 100 and a series of copying steps including from a document-image scanning step to a printing step are explained. Arrow marks indicated in FIG. 1 show a flow direction of image data.

As illustrated in FIG. 1, the image processing apparatus 100 includes two sections; an engine section 101,

**EP 1 580 976 A2**

and a printing control section 102.

The engine section 101 includes an engine controller 110, a scanning unit 111, a scanning correction unit 112, a CL/BK COMP 113, a CL/BK EXT 119, a printing correction unit 120, a writing controller 121, an image forming unit 122, and a FAX controller 123 having an EXT 123a.

The printing control section 102 includes a printing controller 115, a memory 116, a HDD (hard disk) 118, a NIC (network interface controller) 124, and a data format converter 125

A main controller 117 having a microcomputer controls the entire operation of the image processing apparatus 100.

A main bus 114, connecting the engine section 101, the printing control section 102, and the main controller 117, is provided for the image processing apparatus 100.

An external PC (personal computer) 126 is coupled to the image processing apparatus 100 via the NIC 124.

The engine controller 110 controls the engine section 101.

The scanning unit 111 scans an original document image to image signals composed of primary colors of R, G, and B (red, green, and blue), and transmits the image signals to the scanning correction unit 112.

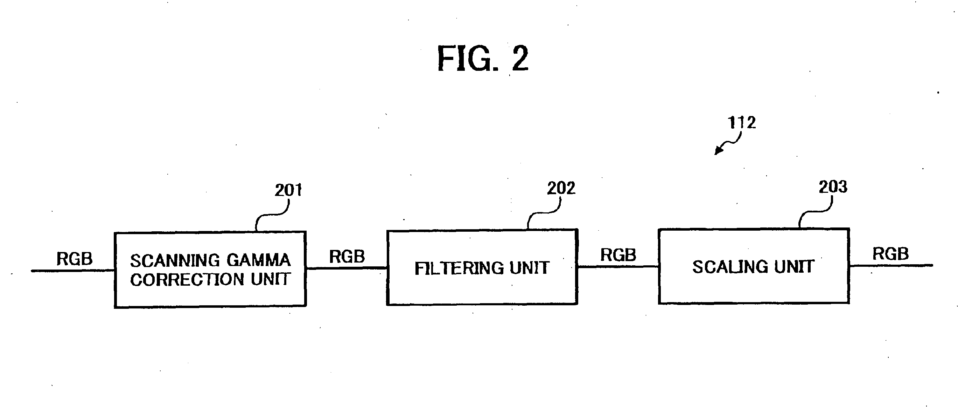

As show in FIG. 2, the scanning correction unit 112 conducts scanning gamma processing at a scanning gamma correction unit 201, filtering at filtering unit 202, and scaling at scaling unit 203 to the image signals composed of primary colors of R, G, and B. These processes are conducted according to predetermined process mode information.

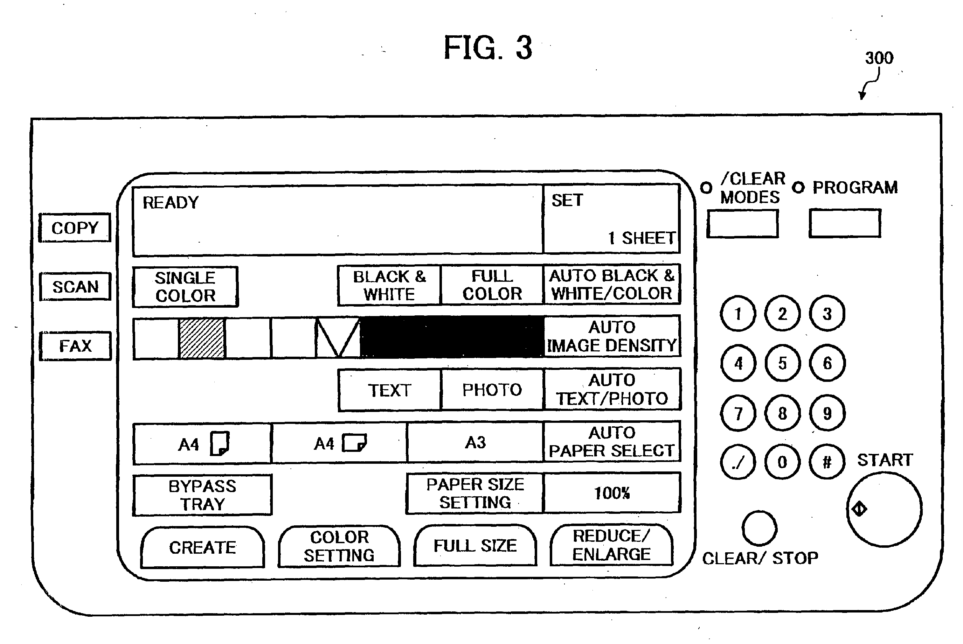

A user can set process mode information by inputting information from an operation unit (OP unit) 300 (see FIG. 3) provided to a casing (not shown) of the image processing apparatus 100, for example.

Hereinafter, the process mode information according to an exemplary embodiment of the present invention includes application modes and image quality modes, and the process mode information, and the application mode and the image quality mode have equivalent meaning in this specification.

The application mode includes "copy," "scan," and "FAX" mode. The image quality mode includes "character", "character-photo," "photo mode," and "notch information." The notch information includes density information of the scanned original document, by which a user can designate preferred density.

Each of R, G, B image signal having 8-bit is processed by the scanning correction unit 112, and compressed to an n-bit data ("n" is 8 or less) by the CL/BK COMP 113 which compresses color/monochrome multi-value data with fixed-length. The CL/BK COMP 113 may also be a general compressor.

The compressed image data is transmitted to the printing controller 115 via the main bus 114.

As shown in FIG. 1, the image data flow in a direction shown by a dotted line and receives appropriate data processing when passing through the printing controller 115, as required.

The printing controller 115 is connected to memory 116 storing image data. The memory 116 includes a semiconductor memory that can be used as working memory.

The memory 116 stores image data, controlled and transmitted by the main controller 117.

The HDD 118 stores image data stored in the memory 116 and process mode information input from the operation unit 300.

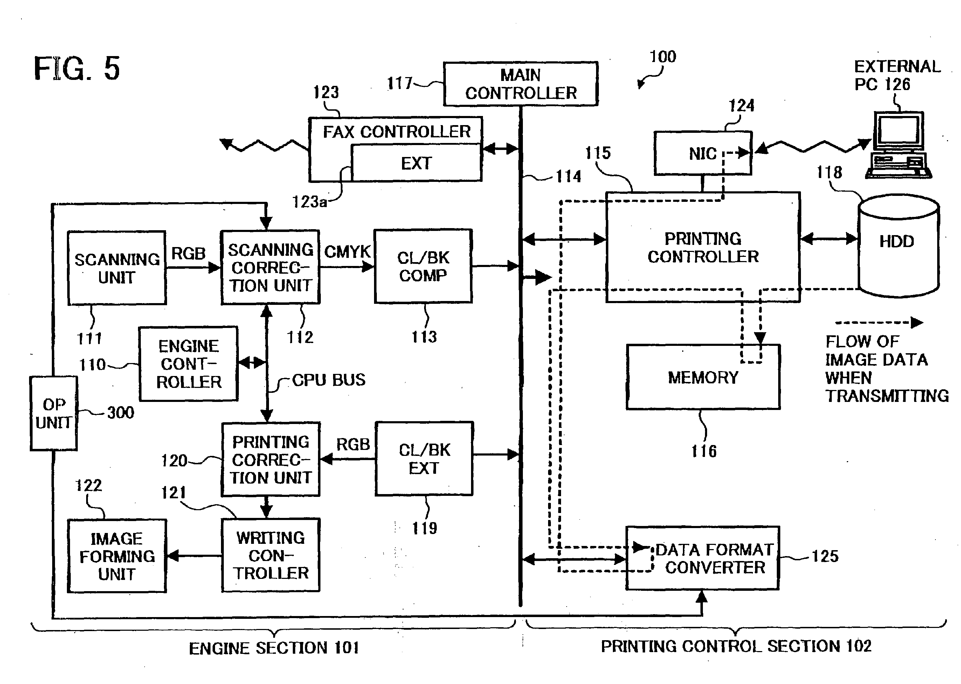

When the image data is read out from the HDD 118 for plotting an image by the image forming unit 122, the image data is transmitted to the memory 116 from the HDD 118 at once. The memory 116 functions as a kind of buffer memory so that the image data transmission from the HDD 118 to the image forming unit 122 can be conducted without transmission errors. If the memory 116 is not provided as in the FIGS. 1 and 5, transmission errors may happen due to a difference between a data writing speed and a data reading speed of the HDD 118 during operations such as scanning, plotting, transmitting, or the like.

With such arrangement, even if a printing cannot be completed normally due to some troubles such as paper jamming during printout operation conducted by the image processing apparatus 100, re-scanning of the original document can be omitted for re-printing.

Furthermore, an electronic sorting can be conducted with such arrangement. With the electronic sorting function, an image processing apparatus such as copier can automatically collates multiple sets of copies in page order.

In addition, a recent image processing apparatus is added with a function that enables re-outputting of image data, as required, by storing scanned document image as image data.

As illustrated in FIG. 1, when outputting image data, the image data stored in the HDD 118 is transmitted to the memory 116 connected to the printing controller 115 at once, and then transmitted to the CL/BK EXT 119 of the engine section 101 via the main bus 114.

The CL/BK EXT 119, functioning as an expansion unit for expanding color/monochrome multi-value data with fixed-length, converts the image data to each of R, G, and B image data having 8-bit data. The converted image data (i.e., R, G, and B image data) is transmitted to the printing correction unit 120. The CL/BK EXT 119 may also be a general expansion unit.

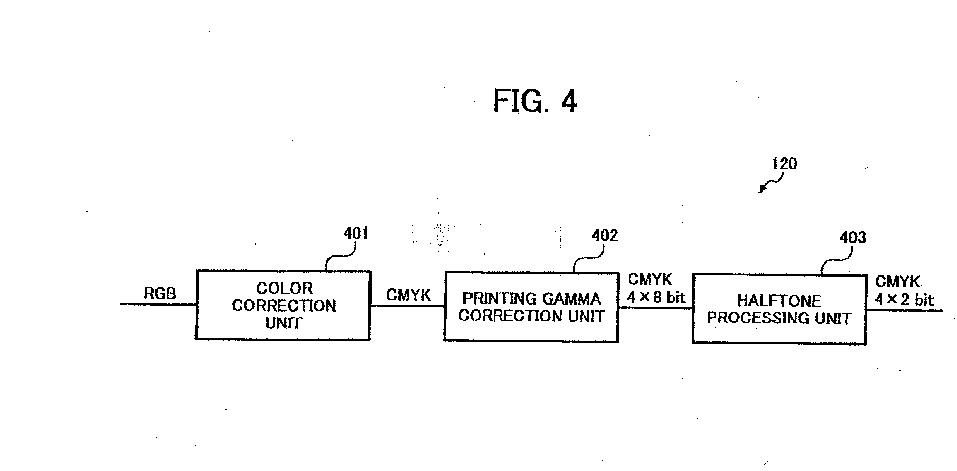

As shown in FIG. 4, the printing correction unit 120 includes a color correction unit 401, a printing gamma correction unit 402, and a halftone processing unit 403.

6

The color correction unit 401 converts the R, G, and B image data to color signals composed of C, M, Y, and K (cyan, magenta, yellow, and black) and transmits the C, M, Y, and K signals to the printing gamma correction unit 402.

The printing gamma correction unit 402 conducts printing gamma correction for the C, M, Y, and K signals and transmits the C, M, Y, and K signals to the halftone processing unit 403.

The halftone processing unit 403 conducts halftone processing for each of C, M, Y, and K signals so that these color signals can be used in the image forming unit 122.

Each of the C, M, Y, and K signals is transmitted to the image forming unit 122, and output as a print image on a transfer sheet (not shown).

Above-described processes are conducted based on process mode information stored in the HDD 118.

The image forming unit 122 can employ a plurality of printing methods including electro-photography method, inkjet method, thermal dye sublimation printing method, silver-photography method, direct thermal recording method, and phase change printing method.

The FAX controller 123 controls facsimile-function of the image processing apparatus 100, and communicates image data with a predetermined network including telephone line. The EXT 123a of the FAX controller 123 conducts compression and extension of to-be-communicated data.

FIG. 5 shows an exemplary case that monochrome image data stored in the HDD 118 is transmitted to the external PC 126. Although not shown in FIG. 5, color image data can be similarly transmitted to the external PC 126.

The NIC (network interface controller) 124 is an interface that couples the image processing apparatus 100 to a network such as LAN (local area network).

The data format converter 125 will be described in later.

As above mentioned, the HDD 118 stores image data processed for copying-purpose and process mode information input from the operation unit 300.

As illustrated in FIG. 5, the image data stored in the HDD 118 is transmitted to the memory 116 connected to the printing controller 115 at once, and then transmitted to the data format converter 125 via the main bus 114.

During such transmission, the process mode information is also transmitted to the data format converter 125 with the image data.

The data format converter 125 conducts an image processing to the image data according to the process mode information.

The data format converter 125 conducts an appropriate data format processing to the image data so that the image data can be used for transmission-purpose, and transmits the processed image data to the external PC 126 via the NIC 124.

The external PC 126 can make an image data acquisition request to the image processing apparatus 100, and can also designate process mode information for the acquisition-requested image data.

In such a case, the main controller 117 detects the process mode information transmitted from the external PC 126, and transmits such process mode information to the data format converter 125.

The data format converter 125 converts a data format of the acquisition-requested image data to another data format according to the process mode information designated by the external PC 126.

In the above discussion, a case that the HDD 118 stores image data compressed in RGB color space for copying-purpose is explained.

Such image data for copying-purpose is generated by scanning an image with an apparatus such as color copier with a certain color space, and stored in the HDD 118.

The certain color space may be a color space of YUV (luminance represented by Y, and blue and red represented by U and V) or CMY (cyan, magenta and yellow), depending on a type (i.e., characteristic) of an apparatus, or may be a color space of sRGB (standard RGB), independent from a type (i.e., characteristic) of an apparatus.

When transmitting such certain color space signals to another apparatus via a network, the color space signals are corrected so that color space signals can be used with another apparatus.

Color spaces that can be used among a plurality of apparatuses include sRGB color space, CIE LAB color space, and a specific color space that can be shared among different apparatuses.

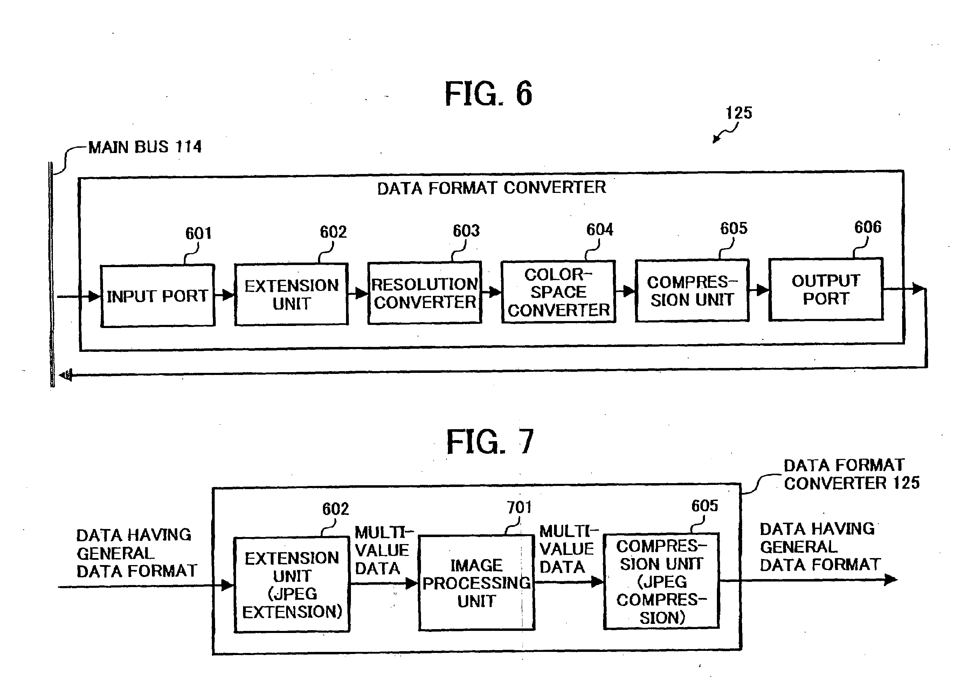

Hereinafter, the data format converter 125 is explained in detail with reference to FIG. 6.

As shown in FIG. 6, the data format converter 125 includes an input port 601, an extension unit 602, a resolution converter 603, a color-space converter 604, a compression unit 605, and an output port 606.

The input port 601 receives image data and process mode information stored in the HDD 118 via the main bus 114, and transmits the image data to the extension unit 602.

The extension unit 602 extends the compressed image data, and transmits the extended image data to the resolution converter 603.

The resolution converter 603 converts a resolution level of the extended image data to another resolution level according to the process mode information, and transmits the resolutionally-converted image data to the color-space converter 604.

The color-space converter 604 converts a color space of the resolutionally-converted image data to another color space according to the process mode information, and transmits the color-space-converted image data to the compression unit 605.

The compression unit 605 encodes and compresses the color-space-converted image data with a predetermined compression and encoding format, and transmits the compressed image data to the output port 606.

The compressed image data is transmitted from the output port 606 to the main bus 114, and further transmitted to an external apparatus such as external PC 126.

With such processes, image data having a first data format stored in the HDD 118 is converted to the image data having a second data format, and is output to the main bus 114.

Hereinafter, a detail of data format conversion process conducted by the data format converter 125 is explained with reference to FIGs. 7 to 9.

The data format converter 125 in FIGs. 7 to 9 includes the extension unit 602, an image processing unit 701, and the resolution converter 603, wherein the image processing unit 701 includes the resolution converter 603 and the color-space converter 604 which are shown in FIG. 6.

In FIGs. 7 to 9, the input port 601 and the output port 606 is omitted from the drawings.

As shown in FIGs. 7 to 9, the data format converter 125 receives multi-value image data having a first data format, and outputs multi-value image data having a second data format, wherein the first data format includes a general data format and a data format dedicated to an image processing apparatus, and the second data format includes a general data format and a data format dedicated to an image processing apparatus.

As such, the extension unit 602 extends image data having a first data format, and the compression unit 605 compresses image data having a second data format as shown in FIGs. 7 to 9.

As shown in FIG. 7, the data format converter 125 receives multi-value image data compressed by a general data format such as JPEG (joint photographic experts group).

The extension unit 602 extends (i.e., restores) such multi-value image data, and transmits the extended multi-value image data to the image processing unit 701.

The image processing unit 701 conducts image processing to the multi-value image data according to the process mode information, and transmits the multi-value image data to the compression unit 605.

The compression unit 605 conducts JPEG compression to the multi-value image data, and outputs the multi-value image data having a general data format (i.e., JPEG) to an external unit.

Although the data format converter 125 shown in FIG. 7 employs JPEG as a general data format in the above example, the data format converter 125 can employ other general data formats that can be used in personal computer such as JPEG 2000.

As such, by conducting data communication using a general data format such as JPEG, data can be communicated among a plurality of units with a same data format (i.e., general data format).

Furthermore, a data format converting system capable of maintaining both data quality and data communication efficiency can be established by employing a general data format.

In addition, when image data is expressed by binary data, such image data can be compressed and extended by a general format such as MHMR/MMR (modified huffman modified read/modified modified read) method.

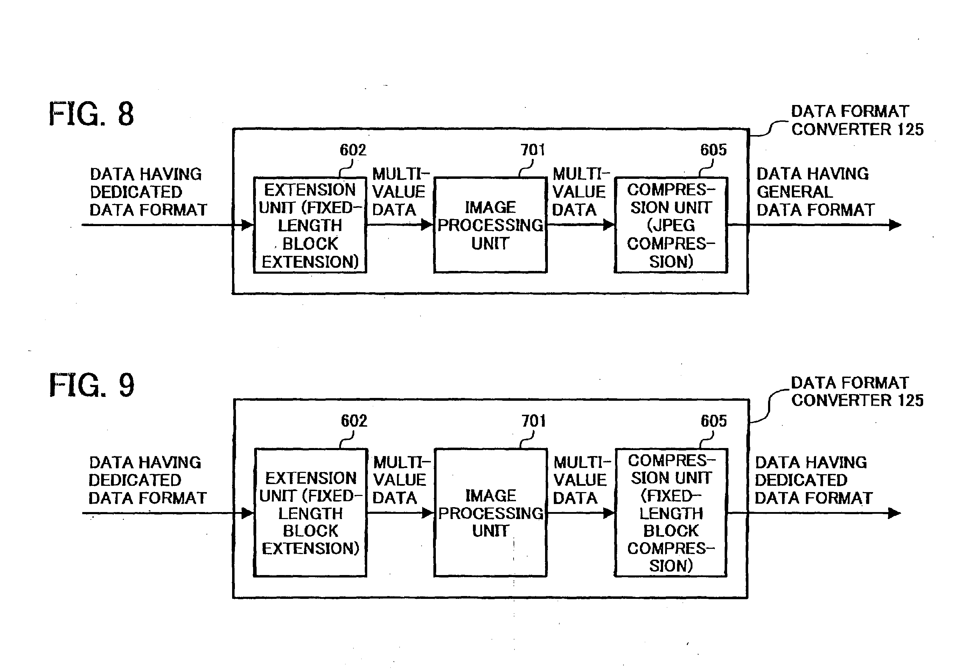

FIG. 8 shows an example that the data format converter 125 receives image data compressed by a data format dedicated to the image processing apparatus 100, and outputs the image data having a general data format, wherein the general data format is similar to the general data format described in an example of FIG. 7.

Such dedicated data format is a special data format, which is unique to the image processing apparatus 100, but is not a general data format (e.g., JPEG, JPEG 2000) that can be used in any personal computer.

Therefore, the extension unit 602 employs a fixed-length block extension method dedicated to the image processing apparatus 100, which maintains compression efficiency and data processing efficiency, as an extension method for image data having a data format dedicated to the image processing apparatus 100.

The compression unit 605 employs a compression method using a general data format, which is similar to an example of FIG. 7.

As shown in FIG. 8, the data format converter 125 receives image data compressed with fixed-length block.

The extension unit 602 extends (i.e., restores) such image data to multi-value image data, and transmits the multi-value image data to the image processing unit 701.

The image processing unit 701 conducts image processing to the multi-value image data according to the process mode information, and transmits the multi-value image data to the compression unit 605.

The compression unit 605 conducts JPEG compression to the multi-value image data, and outputs the multi-value image data having a general data format (i.e., JPEG) to an external unit.

As shown in FIG. 8, the data format converter 125 receives image data, compressed by the fixed-length block compression method dedicated to the image processing apparatus. Therefore, a variation of compression rate of the image data can be controlled to a fixed level.

Furthermore, data processing such as image direction rotation and image sorting can be readily conducted because the image data is processed as a block with such method.

By employing a general data format such as JPEG for image data communication, plurality of units can communicate data each other with a same general data format.

Furthermore, a data format converting system capable of maintaining both data quality and data communication efficiency can be established by using a general data format.

In addition, when image data is expressed as binary data, the compression unit 605 can compress such image data by using a standard compression-and-extension data format such as MHMR/MMR method.

Different from an example in FIG. 8, FIG. 9 shows an example that the data format converter 125 receives image data compressed with a data format dedicated to the image processing apparatus 100, and outputs the image data with such dedicated data format.

Therefore, the compression unit 605 compresses the image data with fixed-length block compression method using dedicated data format.

As shown in FIG. 9, the data format converter 125 receives image data, compressed by the fixed-length block compression method dedicated to the image processing apparatus. Therefore, a variation of compression rate of the image data can be controlled to a fixed level.

Furthermore, data processing such as image direction rotation and image sorting can be readily conducted because the image data is processed as a block with such method.

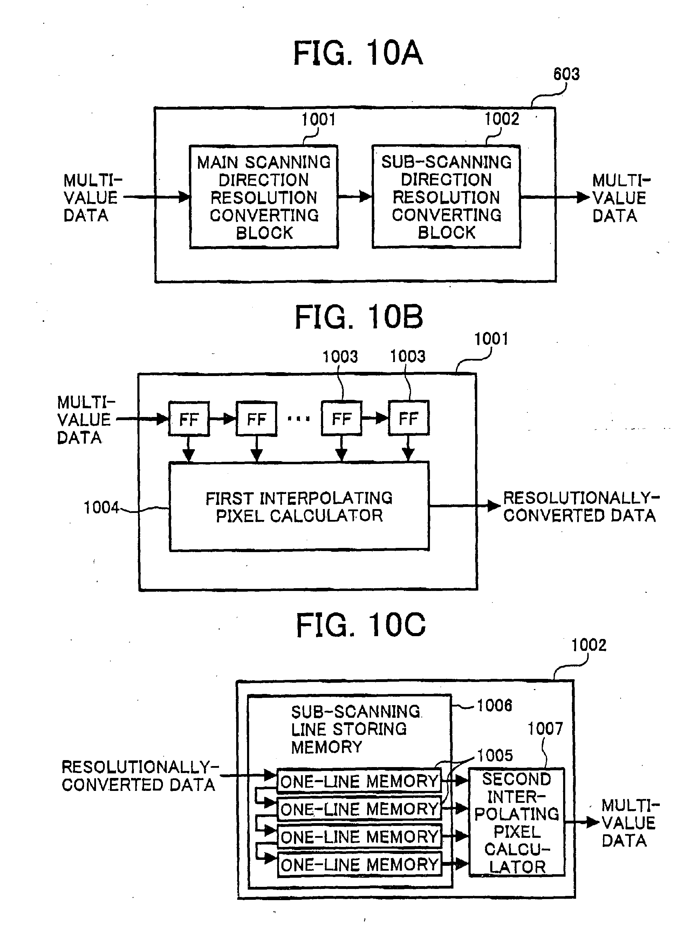

Hereinafter, the resolution converter 603 is explained with reference to FIGs. 10A to 10C.

Examples shown in FIGs. 10A to 10C deal with pixel data having multi-value, and a explains a method that can convert image data to any discretionally designated resolution in both a main scanning direction and a sub-scanning direction, for example.

As shown in FIG. 10A, the resolution converter 603 includes a main scanning direction resolution converting block 1001 and a sub-scanning direction resolution converting block 1002.

As shown in FIG. 10B, the main scanning direction resolution converting block 1001 includes a plurality of flip-flops (FFs) 1003 and a first interpolating pixel calculator 1004.

As shown in FIG. 10C, the sub-scanning direction resolution converting block 1002 includes a plurality of one-line memories 1005, a sub-scanning line storing memory 1006 and a second interpolating pixel calculator 1007.

The main scanning direction resolution converting block 1001 receives multi-value image data and converts resolution of the multi-value image data in main scanning direction according to the process mode information.

The sub-scanning direction resolution converting block 1002 receives the multi-value image data resolutionally-converted in main scanning direction, and converts resolution of the multi-value image data in a sub-scanning direction.

As shown in FIG. 10B, the main scanning direction resolution converting block 1001 receives multi-value image data, and conducts pixel interpolation in a main scanning direction to convert a resolution of the received multi-value image data to another resolution. The external PC 126 can conduct such designation, for example.

For example, image data having 600 dpi resolution can be converted to the image data having 100 dpi resolution. Values of pixel data can be calculated by a general method such as nearest neighbor pixel substitution method, adjacent two-pixel weighted average method, three-dimensional convolution function method.

Specifically, the plurality of flip-flops (FFs) 1003, capable of latching each one bit of data, memorize pixel data, and the first interpolating pixel calculator 1004 calculates data-value to be interpolated.

As shown in FIG. 10C, the sub-scanning direction resolution converting block 1002 receives the multi-value image data, which is resolutionally-converted in a main scanning direction.

Each of the one-line memories 1005 of the sub-scanning line storing memory 1006 can store one line data, resolutionally-converted in a main scanning direction.

The second interpolating pixel calculator 1007 receives the image data from the each of the one-line memories 1005, and calculates data-value of lines to be interpolated based on reference pixel data in a sub-scanning direction.

Values of pixel data can be calculated by a general method such as nearest neighbor pixel substitution method, adjacent two-pixel weighted average method, three-dimensional convolution function method as in the main scanning direction.

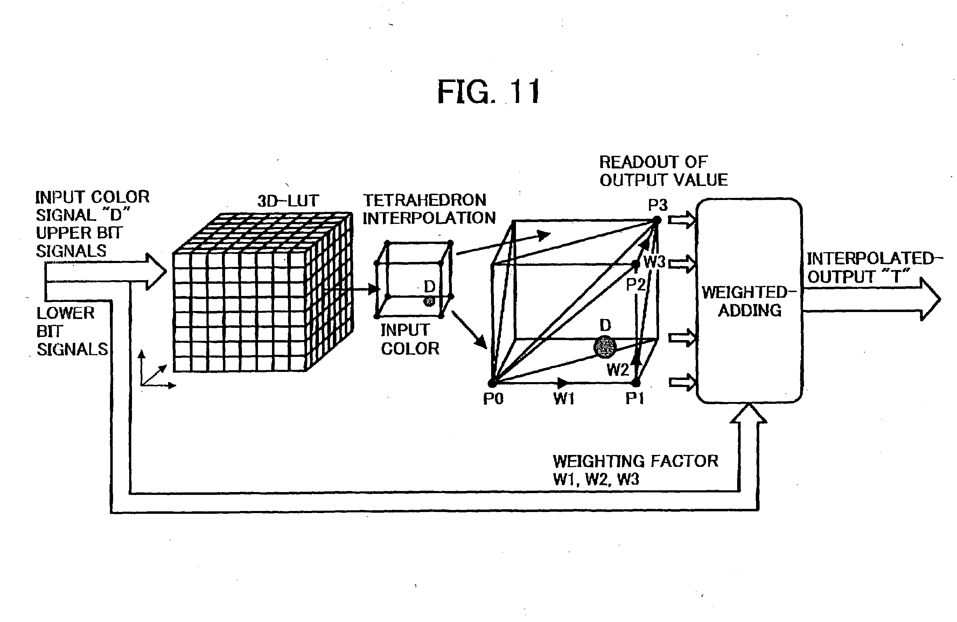

Hereinafter, the color-space converter 604 having a color-space conversion function is explained with reference to FIG. 11.

FIG. 11 shows a case that a color-space conversion is conducted by using a table interpolation method.

As illustrated in FIG. 11, a predetermined three-dimensional LUT (look-up table) is used for such table interpolation method, wherein the LUT is divided in eight sections in each of the x-axis, y-axis, and z-axis direction.

An input color signal "D" is divided into upper bits and lower bits. The upper bits of the color signal "D" are used for referring the LUT, and the lower bits of the color signal "D" are used for three-dimensional interpolation to obtain a precise interpolated-output "T."

Although the three-dimensional interpolation method can be conducted with a plurality of methods, "tetrahedron interpolation method," one of the simplest three-dimensional interpolation method, is explained hereinafter.

As illustrated in FIG. 11, a color space of the color signal "D" is divided into a plurality of unit cubes, wherein the color space is divided in eight sections in each of the x-axis, y-axis, and z-axis direction.

Furthermore, one unit cube is divided into six tetrahedrons by dividing the one unit cubic.

If a unit cube containing the input color signal "D" is determined, specify a tetrahedron where the input color "D" exists.

Each of 20, P1, P2, P3 shown in FIG. 11 represents a lattice point of such tetrahedron.

Then, set weighting factors W1, W2, and W3 from the lower bits of the input color signal "D," wherein the weighting factors W1, W2, and W3 corresponds to the lower bits of the input color signal "D."

The interpolated output "T" for the input color signal "D" under such condition is calculated as below.

$$(T) = (P0) + W1[(P1)-(P0)] + W2[(P2)-(P0)] + W3[(P3)-(P0)]$$

wherein each of the (P0), (P1), (P2), and (P3) is an output value, stored in a color conversion table, for each of the lattice point P0, P1, P2, and P3.

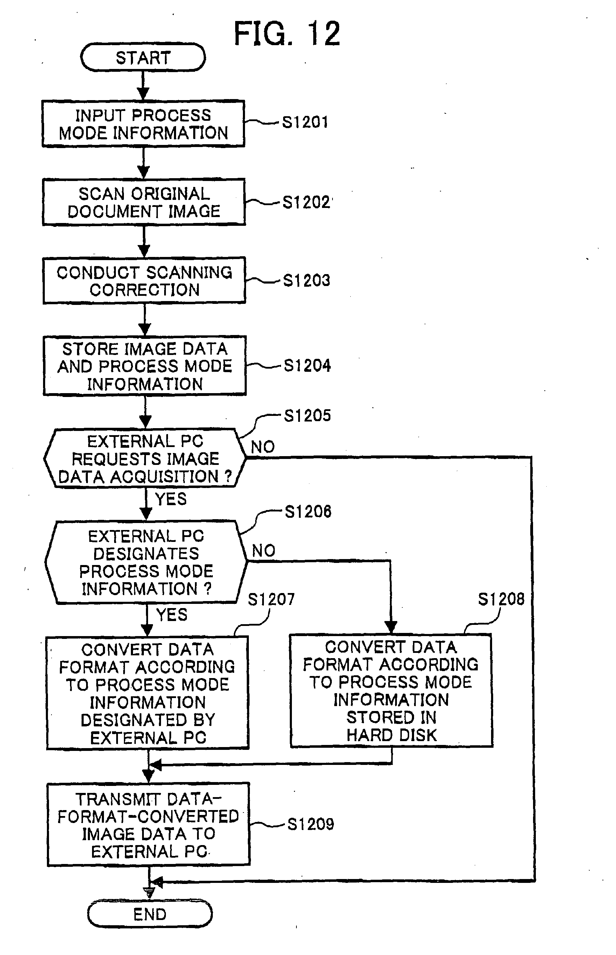

Hereinafter, image data generation and transmission processing in the image processing apparatus 100 according to an exemplary embodiment of the present invention is explained with reference to FIG. 12.

FIG. 12 is a flow chart explaining steps for image data generation and transmission.

In Step S1201, process mode information for to-be-generated image data is input from the operation unit 300 of the image processing apparatus 100.

Such process mode information includes "image quality mode". Specifically, "image quality mode" includes character mode, character-photo mode, photo mode, and notch information. The notch information includes density information of the scanned original document, by which a user can designate preferred density.

In Step S1202, the scanning unit 111 scans an original document image.

In Step S1203, the scanning correction unit 112 conducts a scanning correction process to the scanned image data.

Such scanning correction process includes scanning gamma-processing, filtering, and scaling, for example, and is conducted according to predetermined process mode information set in Step S1201.

In Step S1204, image data, which received the scanning correction process, and the predetermined process mode information set in Step S1201, are stored in the HDD 118.

In Step S1205, the main controller 117 judges whether the external PC 126 requests image data acquisition.

If the main controller 117 judges that there is no request for image data acquisition, the process goes to "END."

If the main controller 117 judges that there is a request for image data acquisition, the main controller 117 judges whether the external PC 126 designates process mode information for acquisition-requested image data in Step S1206.

If the main controller 117 judges that the external PC 126 designates the process mode information for acquisition-requested image data, the process goes to Step S1207.

If the main controller 117 judges that the external PC 126 does not designate the process mode information for acquisition-requested image data, the process goes to Step S1208.

In Step S1207, the data format converter 125 converts a data format of the image data read out from the HDD 118 to another data format according to the process mode information designated by the external PC 126, and transmits the data-format-converted image data to the external PC 126 in Step S1209.

In Step S1208, the data format converter 125 converts a data-format of the image data read out from the HDD 118 to another data format according to process mode information stored in the HDD 118 in Step S1201, and transmits the data-format-converted image data to the external PC 126 in Step S1209.

When image data is stored in or read out from the HDD 118, predetermined compression or extension processes are assumed to be conducted to the image data.

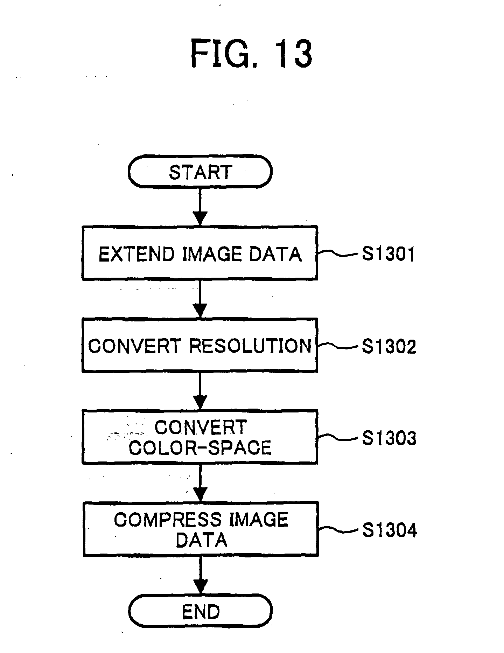

Hereinafter, an image data processing in the data format converter 125 is explained with reference to FIG. 13.

Although FIG. 12 shows different steps for image data format conversion depending on with or without process mode information designation from the external PC 126, a similar process is applied for image data format conversion in both cases. Accordingly, one exemplary image data format conversion process conducted by the data format converter 125 is explained with reference to FIG. 13.

FIG. 13 is a flow chart explaining image data format conversion process in the data format converter 125.

In Step S1301, the extension unit 602 extends the image data read out from the HDD 118 to restore the image data as non-compressed data because image data stored in the HDD 118 is compressed.

In Step S1302, the resolution converter 603 conducts a resolution-converting process to the extended image data.

In Step S1303, the color-space converter 604 conducts a color-space conversion process to the image data.

In Step S1304, the compression unit 605 compresses the image data before transmitting the image data to an external unit.

If the external PC 126 designates process mode information for the acquisition requested image data, Steps S1302 and S1303 are conducted according to such process mode information.

If the external PC 126 does not designate process mode information for the acquisition requested image data, Steps S1302 and S1303 are conducted according to process mode information, input from the operation unit 300 and stored in the HDD 118.

Furthermore, as above-described, the data format converter 125 can receive image data having a first data format and output the image data having a second data format. Such process is mainly conducted in Step S1304.

Accordingly, the data format converter 125 that receives image data having a general data format can output the image data having a general data format, and the data format converter 125 that receives image data having a data format dedicated to the image processing apparatus 100 can output the image data having a general data format.

Furthermore, the data format converter 125 that receives image data having a dedicated data format can output the image data having the dedicated data format.

Such data format for the image data, output from the data format converter 125, can be also determined by process mode information input from the operation unit 300, or process mode information designated by the external PC 126.

With such arrangement, an original document image scanned by an image processing apparatus can be converted to image data having a general data format, which can be used in a plurality of image processing apparatuses.

When such image data having a general data format is transmitted to external apparatuses, such image data can be used by the external apparatuses.

Hereinafter, another exemplary embodiment according to the present invention is explained.

Different from the above-described exemplary embodiment, in which image data retain color image characteristics before and after the data format converting, the following another exemplary embodiment converts input image data having color characteristics to the image data having monochrome characteristics.

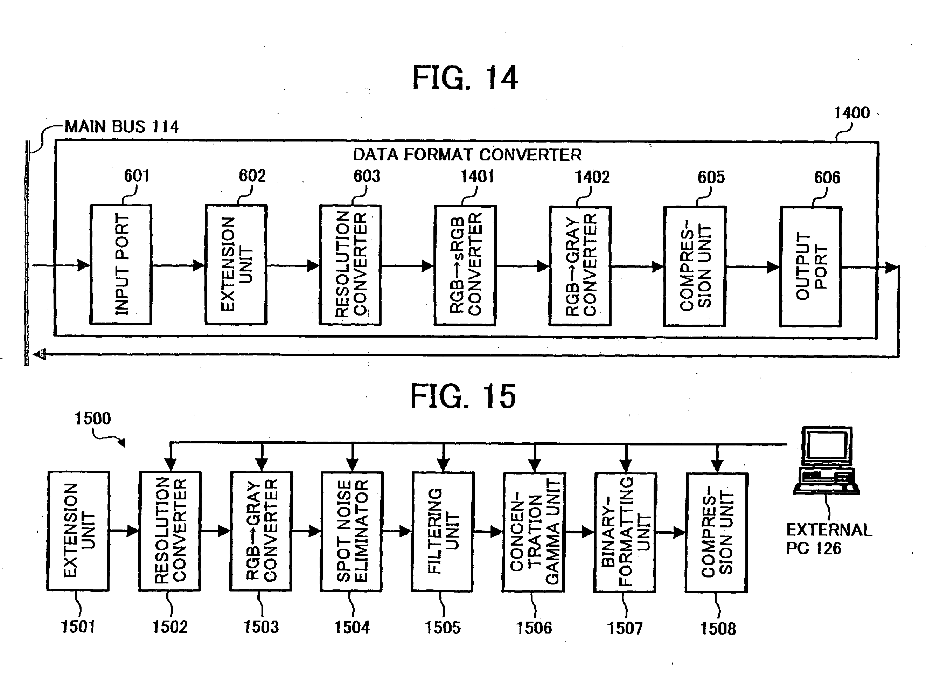

Because an image processing apparatus for the following another exemplary embodiment employs similar configuration as in the image processing apparatus 100 of the above-described exemplary embodiment except a data format converter, an explanation is given only to data format converters 1400 and 1500 with reference to FIGs. 14 and 15.

FIG. 14 is a block diagram explaining a configuration of the data format converter 1400 provided in an image processing apparatus of another exemplary embodiment.

As shown in FIG. 14, the data format converter 1400 includes the input port 601, the extension unit 602, the resolution converter 603, a RGB->sRGB converter 1401, a RGB->Gray converter 1402, the compression unit 605, and the output port 606.

The input port 601 receives compressed image data and process mode information stored in the HDD 118 via the main bus 114, and transmits the image data to the extension unit 602.

The extension unit 602 extends the compressed image data, and transmits the extended image data to the resolution converter 603.

The resolution converter 603 converts a resolution level of the image data according to the process mode information, and transmits the resolutionally-converted image data to the RGB->sRGB converter 1401.

If the input image data is RGB image data, which is unique to the image processing apparatus, the RGB->sRGB converter 1401 converts the RGB image data to a standard color space such as sRGB, and transmits the sRGB image data to the RGB->Gray converter 1402.

The RGB->Gray converter 1402 converts the sRGB image data to monochrome image data, and transmits the monochrome image data to the compression unit 605.

The compression unit 605 compresses and encodes the monochrome image data with a predetermined data compression and encoding format, and transmits the compressed monochrome image data to the output port 606.

The compressed monochrome image data is transmitted from the output port 606 to the main bus 114, and then transmitted to an external apparatus such as external PC 126.

With such processes, image data having a first data format and stored in the HDD 118 is converted to image data having a second data format, and such image data having the second data format is output to an external unit.

In the above-described another exemplary embodiment, RGB image data, which is unique to the image processing apparatus, is converted to sRGB image data at once, and then converted to monochrome image data so that the monochrome image data conforming to a standard color space can be obtained.

The input port 601, extension unit 602, resolution converter 603, compression unit 605 and output port 606 used in another exemplary embodiment are similar to those used in the previously described exemplary embodiment.

Hereinafter, another data format converter modifying the data format converter 1400 is explained with reference to FIG. 15.

FIG. 15 shows the data format converter 1500, which has modified the configuration of the data format converter 1400 illustrated in FIG. 14.

In FIG. 15, the above-mentioned input port 601 and output port 606 are omitted from the drawing.

The data format converter 1500 includes an extension unit 1501, a resolution converter 1502, a RGB->Gray converter 1503, a spot noise eliminator 1504, a filtering unit 1505, a concentration gamma unit 1506, a binary-formatting unit 1507, and a compression unit 1508.

Assume that compressed image data stored in the HDD 118' is image data according to a predetermined color space. In other words, such image data is compressed with a fixed-length multi-value compression method for each R, G, and B image.

The extension unit 1501 extends the compressed RGB image data, and transmits the extended image data to the resolution converter 1502.

The resolution converter 1502 converts resolution of the extended image data with a predetermined scaling ratio, and transmits the resolutionally-converted RGB image data to the RGB->Gray converter 1503.

The RGB->Gray converter 1503 converts RGB image data to monochrome image data, and transmits the monochrome image data to the spot noise eliminator 1504.

The spot noise eliminator 1504 detects and eliminates a spot noise of the monochrome multi-value image data with a spot noise detection algorithm, and transits the monochrome image data to the filtering unit 1505.

The filtering unit 1505 conducts emphasizing and smoothing processes to the monochrome image data according to process mode information input from the operation unit 300 or designated by the external PC 126, and transmits the monochrome image data to the concentration gamma unit 1506.

The concentration gamma unit 1506 adjusts concentration level of the image data, and transmits the monochrome image data to the binary-formatting unit 1507.

The binary-formatting unit 1507 conducts binary-formatting of the monochrome image data with a predetermined method, and transmits the binary-formatted monochrome image data to the compression unit 1508.

The compression unit 1508 compresses the monochrome image data using a general data compression method such as MHMR/MMR method.

By applying above-described configuration for the data format converter 1500, color image data can be converted to monochrome binary image data, and the external PC 126 can receive such monochrome binary image data.

Such arrangement is useful when a user wants to receive monochrome binary image data instead of color image data to the external PC 126 because the color image data having a large amount of data will put heavy load to the external PC 126.

Therefore, the above-described another exemplary embodiment can cope with a user requesting a less heavy loading for data communication.

Hereinafter, details of the each block in the data format converter 1500 in FIG. 15 are explained.

Explanations for the extension unit 1501, resolution converter 1502, RGB->Gray converter 1503 and compression unit 1508 are omitted because these units conduct similar function as in the previously-described embodiments.

At first, a process conducted by the spot noise eliminator 1504 is explained.

If a noise such as spot is included in an original document image, an output image produced from such original document image may include an area not aesthetic to human eyes.

In such a case, the spot noise eliminator 1504 removes spot noise, as required, with a spot noise elimination algorithm.

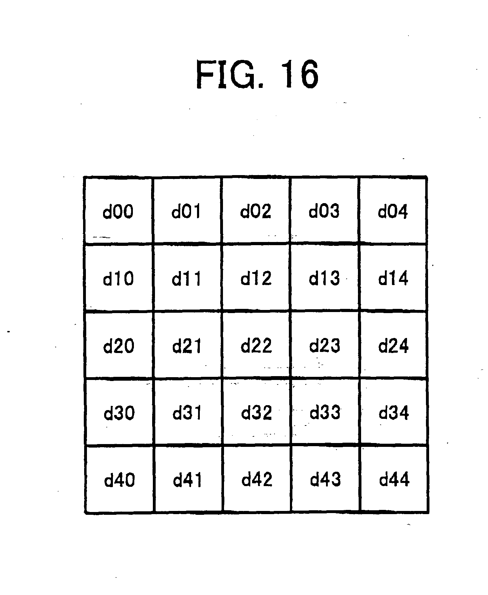

The spot noise eliminator 1504 can employ a plurality of spot noise elimination algorithms. For example, the spot noise eliminator 1504 can employ a method using a matrix illustrated in FIG. 16, which is explained hereinafter.

FIG. 16 is an exemplary matrix, divided in 5x5 in each side and having 25 blocks as illustrated in the drawing.

In this example, the spot noise eliminator 1504 observes a pixel block "d22."

If pixel values for all pixel blocks except the pixel block "d22" are less than a predetermined threshold value of "TH1," for example, the pixel value of the observed pixel block "d22" is changed to "zero", that is the pixel block "d22" is changed to a white pixel.

With such processing, noise can be removed from images scanned by the scanning unit 111.

If the image data stored in the HDD 118 is prepared by scanning an image such as document image, the above-described spot noise elimination method can be used effectively.

If the image data stored in the HDD 118 is prepared from printer RIP (raster image processing) data, for example, which is prepared electronically, the above-described spot noise elimination is not required.

Accordingly, a high quality image can be reproduced by selecting operational parameters for spot noise elimination, as required, according to an image type to be transmitted to an external apparatus such as external PC 126.

Hereinafter, a process conducted by the filtering unit 1505 is explained.

A user can obtain an optimal image matched to a user's intention by changing process conditions for the filtering unit 1505 with the external PC 126 which can designate resolution level or with process mode information input from the operation unit 300, as required.

The filtering process modulates MTF (modulation transfer function) of image data.

If an original image mainly includes text characters, quality of the image can be improved by emphasizing MTF in the filtering process.

If an original image mainly includes pictures, quality of the image can be improved by applying some smoothing in the filtering process.

Furthermore, the filtering process can be also used for correcting image degradation, which happens when changing resolution of image data.

Accordingly, a high quality image can be produced by selecting filtering parameters corresponding to types of image.

Hereinafter, a process conducted by the concentration gamma unit 1506 is explained.

The concentration gamma unit 1506 includes a RAM (random access memory) for a LUT (look-up table).

The gamma converting process changes image concentration gradient and concentration characteristics.

A user can obtain an ouput-image having a concentration level matched to the user's intention by changing concentration level setting in the concentration gamma unit 1506 with the external PC 126 which can designate concentration level, as required.

When process mode information is input from the operation unit 300, an image can be output with a concentration level according to such process mode information stored in the HDD 118.

Hereinafter, a process conducted by the binary-formatting unit 1507 is explained.

The binary-formatting unit 1507 conducts halftone processing to multi-value image data to convert the multi-value image data to image data expressed in binary data format.

A various kinds methods are used for the halftone processing, in which the multi-value image data is quantized to binary image data, which is expressed in one-bit or two-bit, for example.

Hereinafter, typical methods such as simple quantization method, dither method, and error diffusion method are explained, and the multi-value image data is quantized in one-bit format for convenience of the explanation.

As for the simple quantization method, any given value within a dynamic range of multi-value image data is set as a threshold value, and image data is quantized in one-bit format.

For example, assume a case that to-be-quantized multi-value image data have a dynamic range of 256 (i.e., 0 to 255) and quantize the image data to "0" or "1" using a threshold value set to "128."

In such a case, image data having a value of "100" is quantized to "0," and image data having a value of "200" is quantized to "1," for example.

The dither method uses threshold values configured in a matrix form to quantize each pixel in one-bit format.

If threshold values in the matrix are set randomly within the dynamic range of the image data, halftone concentration can be produced for image data quantized in one-bit format, although the halftone concentration and image resolution have a trade-off relation.

The error diffusion method quantizes multi-value image data to one-bit format with any given threshold value as in the simple quantization method.

However, in the error diffusion method, quantization error values for nearby pixels already quantized in a raster format are stored in a computer, and such error values are added to a pixel to be quantized so that quantization error values for total image data can be minimized to a lowest level in a halftone processing as much as possible.

Accordingly, the binary-formatting unit 1507 can conduct binary-format processing to multi-value image data to reduce data amount.

In addition, halftone processing methods matched to a user's intention can be selected to produce a high quality image.

A user can obtain an ouput-image matched to the user's intention by changing halftone processing condition with the external PC 126, which can designate image quality mode information, as required.

When process mode information is input from the operation unit 300, an ouput-image can be produced according to such process mode information stored in the HDD 118.

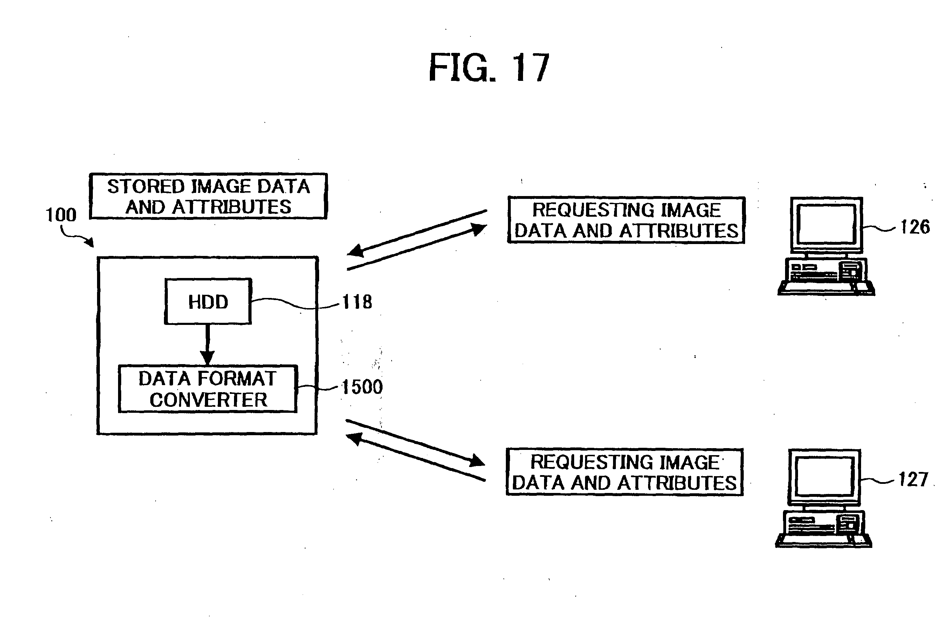

Hereinafter, a process for outputting image data to an external apparatus such as personal computer is explained with reference to FIG. 17.

As shown in FIG. 17, each of the external PCs 126 and 127 requests image data acquisition to the HDD 118 by designating attribute for the acquisition-requested image data stored in the HDD 118 image data.

Based on attribute information for image data designated by the external PCs 126 and 127, and process mode information for such image data input from the operation unit 300 and stored in the HDD 118, image data parameters for the data format converter 1500 are determined.

Based on such image data parameters, parameters for the resolution converter 1502, filtering unit 1505, concentration gamma unit 1506, binary-formatting unit 1507, and compression unit 1508 in the data format converter 1500 are' changed, and image-processed image data is transmitted to the external PCs 126 and 127.

In an example illustrated in FIG. 17, it is assumed that the HDD 118 of the image processing apparatus 100 stores image data having a certain color space, which is scanned as a color copy image by a color copier, for example.

As shown in FIG. 17, the HDD 118 of the image processing apparatus 100 stores image data having following attributes.

Resolution: 600 dpi (dot per inch)
Color space: RGB
Compression: apparatus-unique block compression
Image quality mode when stored: text character
Scaling when stored: 100%
Concentration notch when stored: 4

The external PC 126 has requested to acquire image data having following attributes.

Resolution: 400 dpi
Color space: Monochrome (multi-value)
Concentration for output: notch 6
Data format: JPEG (joint photographic expert group)

The external PC 127 has requested to acquire image data having following attributes.

Resolution: 300 dpi
Color space: Monochrome (binary)
Concentration for output: notch 4
Data format: TIFF (tagged image data format)

The data format converter 1500 conducts image processing requested by each of the external PCs 126 and 127.

Image data stored in the HDD 118 is compressed as a block by an apparatus-unique compression method. Therefore, the extension unit 1501 extends such image data to non-compressed data.

The resolution converter 1502 determines resolution-converting parameters based on a resolution level requested from each of the external PCs 126 and 127 and a resolution level for image data stored in the HDD 118.

Then, a data resolution conversion from the 600 dpi to 400 dpi is conducted for the image data requested by the external PC 126, and a data resolution conversion from the 600 dpi to 300 dpi is conducted for the image data requested by the external PC 127, for example.

The RGB->Gray converter 1503 converts color space of the image data, to be transmitted to each of the external PCs 126 and 127, from RGB to monochrome.

In the above-discussed image processing apparatus according to another exemplary embodiment of the present invention, a filtering process is conducted when image data is stored in the HDD 118.

However, if degradation happens to image (e.g., pictures and text characters) due to a resolution conversion, another filtering process may be conducted, as required.

As for this image processing apparatus, a gamma processing is not conducted when image data is stored in the HDD 118.

Therefore, the HDD 118 stores image quality mode and concentration notch as process mode information when the HDD 118 stores image data.

The concentration gamma unit 1506 controls gamma concentration of the image data by referring such process mode information when each of the external PCs 126 and 127 requests image data acquisition.

When each of the external PCs 126 and 127 designates a change of notch information, the concentration gamma unit 1506 controls gamma concentration based on such changed notch information.

The compression unit 1508 converts the data format of the image data requested by the external PC 126 to JPEG.

The compression unit 1508 converts the data format of the image data requested by the external PC 127 to TIFF, wherein the TIFF data is compressed by the MHMR.

The HDD 118 stores process mode information input from the operation unit 300 with image data.

Therefore, in case of the external PCs 126 and 127 acquire image data without changing attributes of the image data stored in the HDD 118, the external PCs 126 and 127 does not need to designate image data attributes because such attributes can be used as it is.

Above-described exemplary image data generation and transmission process explained with reference to FIG. 17 is conducted according to the flow charts shown in FIG. 12 and FIG. 13. However, in case of the exemplary case in FIG. 17, a data format converting process requires a publicly-known process of converting color image data to monochrome image data between Steps S1301 and Step S1302 in the flow chart of FIG. 13.

As discussed above, an image processing apparatus, an image data generation and transmission method, and image data generation and transmission program according to exemplary embodiments of the present invention can generate image data having small amount of data having a general data format, used among a plurality of image processing apparatuses, from scanned original document image.

Therefore, the image processing apparatus according to exemplary embodiments of the present invention can realize an effective data transmission and data utilization among a plurality of external apparatuses by transmitting the above-mentioned image data to such plurality of external apparatuses.

The image data generation and transmission method according to exemplary embodiments of the present invention can be realized by preparing and running a computer-readble program explained in the exemplary embodiments on a computer such as personal computer and workstation.

Such computer-readable program can be stored in a computer-readable recoding medium including hard disk, flexible disk, CD-ROM (compact disk read-only memory), MO (magneto-optical) disk, DVD (digital versatile disc), and can be read out from the recoding medium by a computer and run by the computer.

Furthermore, such computer-readable program may be transmitted and downloaded to a computer via a network including the Internet.

As described above, an image processing apparatus, an image data generation and transmission method, and image data generation and transmission program according to exemplary embodiments of the present invention are useful for an image processing including from a document scanning step and image data generating step, and preferable for transmitting image data processed in the image processing apparatus to an external apparatus.

The invention may be conveniently implemented using a conventional general purpose digital computer programmed according to the teaching of the present specification, as will be apparent to those skilled in art in the computer art. Appropriate software coding can readily be prepared by skilled programmers based on the teaching of the present disclosure, as will be apparent to those skilled in art in the software art. The present invention may also be implemented by the preparation of the application specific integrated circuits or by interconnecting an appropriate network of conventional component circuits, as will be apparent to those skilled in the art.

Numerous additional modifications and variations are possible in light of the above teachings. It is therefore to be understood that within the scope of the appended claims, the disclosure of the present invention may be practiced otherwise than as specifically described herein.

This application claims priority from Japanese patent applications No. 2004-080637 filed on March 19, 2004 in the Japan Patent Office, the entire contents of which are hereby incorporated by reference herein.

## Claims

1. An image processing apparatus connectable to an external apparatus via a network, comprising;

   a selecting input unit configured to select an application mode and an image quality mode;
   a scanning unit configured to scan an original document to generate predetermined image signals;
   a scanning correction unit configured to generate image data by conducting a first predetermined image processing on the predetermined image signals according to the application mode and the image quality mode;
   a storage unit configured to store the image data, and the application mode and the image quality mode;
   a compression unit configured to compress the image data when storing the image data to the storage unit;
   an expansion unit configured to expand the compressed image data;
   a data format converting unit configured to convert a data format of the image data according to the application mode and the image quality mode; and
   a communication unit configured to communicate the image data with the external apparatus,

   wherein the application mode includes copy mode, scan mode, and facsimile mode, and the image quality mode includes character mode, character-photo mode, and photo mode.

2. The image processing apparatus according to Claim 1, wherein the data format converting unit includes a data expansion unit configured to expand the compressed image data, an image processing unit configured to conduct a second predetermined image processing on the expanded image data, and a data compression unit configured to compress the expanded image data.

3. The image processing apparatus according to Claim 1 or 2, wherein the data format converting unit receives image data having a first data format, and outputs the image data having a second data format.

4. The image processing apparatus according to Claim 3, wherein the first data format is either a data format dedicated to the image processing apparatus or a general data format.

5. The image processing apparatus according to Claim 3 or 4, wherein the second data format is either a data format dedicated to the image processing apparatus or a general data format.

6. The image processing apparatus according to any one of the preceding claims, wherein the data format converting unit includes a resolution converting unit configured to convert a resolution level of image data, input to the data format converting unit.

7. The image processing apparatus according to any one of the preceding claims, wherein the data format converting unit includes a color-space conversion unit configured to convert a color space of image data, input to the data format converting unit, to another color space that is independent from characteristics of the image processing apparatus.

8. The image processing apparatus according to any one of the preceding claims, wherein the data format converting unit includes a monochrome converting unit configured to convert color image data, input to the data format converting unit, to monochrome image data.

9. The image processing apparatus according to any one of the preceding claims, wherein the data format converting unit includes a spot noise elimination unit configured to conduct a spot noise elimination process to image data, input to the data format converting unit.

10. The image processing apparatus according to any one of the preceding claims, wherein the data format converting unit includes a filtering unit configured to conduct a predetermined filtering process to image data, input to the data format converting unit.

11. The image processing apparatus according to any one of the preceding claims, wherein the data format converting unit includes a concentration gamma processing unit configured to conduct a predetermined concentration gamma processing to image data, input to the data format converting unit.

12. The image processing apparatus according to any one of the preceding claims, wherein the data format converting unit includes a binary-format processing unit configured to convert multi-value image data, input to the data format converting unit, to binary-formatted image data.

13. The image processing apparatus according to any one of the preceding claims, wherein the data format converting unit further conducts image processing to image data, input to the data format converting unit, according to an application mode and an image quality mode designated by the external apparatus and received by the data format converting unit via the communication unit.

14. An image data generation and transmission method conducted in an image processing apparatus connected to an external apparatus via a network, comprising the steps of:

   selecting an application mode and an image quality mode;
   scanning an original document to generate predetermined image signals;
   correcting the predetermined image signals to obtain image data;
   storing the image data, the application mode and the image quality mode;
   converting an attribute of the image data according to the application mode and the image quality mode; and
   transmitting the image data converted in the converting step to the external apparatus.

15. The image data generation and transmission method according to Claim 14, further comprising the steps of:

scanning an original document to generate predetermined image signals;

correcting the predetermined image signals to obtain image data;

storing the image data;

requesting an acquisition of the image data from the external apparatus;

designating an application mode and an image quality mode for the acquisition requested image data from the external apparatus;

converting an attribute of the image data according to the application mode and image quality mode designated in the designating step; and

transmitting the image data converted in the converting step to the external apparatus.

**16.** The image data generation and transmission method according to claim 14 or 15, wherein the image processing apparatus comprising;

a selecting unit configured to select an application mode and an image quality mode

a scanning unit configured to scan an original document to generate predetermined image signals;

a scanning correction unit configured to generate image data by conducting a first predetermined image processing to the predetermined image signals;

a storage unit configured to store the image data, the application mode and the image quality mode;

a compression unit configured to compress the image data when storing the image data to the storage unit;

an extension unit configured to extend the compressed image data;

a data format converting unit configured to convert a data format of the image data according to the application mode and the image quality mode; and

a communication unit configured to communicate the image data with the external apparatus.

**17.** The image data generation and transmission method according to claim 14, 15 or 16 wherein the converting step includes a data extension unit configured to extend the compressed image data, an image processing unit configured to conduct a second predetermined image processing to the extended image data, and a data compression unit configured to compress the extended image data.

**18.** The image data generation and transmission method according to any one of claims 14 to 17, wherein the converting step receives image data having a first data format, and outputs the image data having a second data format, and outputs the image data having a second data format.

**19.** The image data generation and transmission method according to any one of claims 14 to 18, wherein the first data format includes a data format dedicated to the image processing apparatus and a general data format.

**20.** The image data generation and transmission method according to any one of claims 14 to 19, wherein the second data format includes a data format dedicated to the image processing apparatus and a general data format.

**21.** The image data generation and transmission method according to any one of claims 14 to 20, wherein the converting step converts an attribute of the image data stored in the storing step according to the application mode and the image quality mode set in the setting step.

**22.** The image data generation and transmission method according to claim 15 or any claim dependent thereon, wherein the converting step converts an attribute of the image data stored in the storing step according to the application mode and the image quality mode designated from the external apparatus in the designating step.

**23.** The image data generation and transmission method according to any one of claims 14 to 22, wherein the converting step further comprising the steps of:

expanding compressed image data;

altering the resolution of the expanded image data;

changing a color space of the resolution-altered image data to another color space that is independent from characteristics of the image processing apparatus; and

compressing the image data having the other color space.

**24.** The image data generation and transmission method according to any one of claims 14 to 23, wherein the converting step further comprising the steps of:

expanding compressed image data;
altering the resolution of the expanded image data;
changing the resolution-altered image data to monochrome image data;
eliminating a spot noise from the monochrome image data;
filtering the monochrome image data;
gamma-processing the monochrome image data;
binary-formatting the monochrome image data; and
compressing the binary-formatted monochrome image data.

25. A computer program comprising computer-readable instructions that, when executed by a computer of an image processing apparatus connected to an external apparatus via a network, instructs the image processing apparatus to carry out a method according to any one of claims 14 to 24.

26. The computer program according to claim 25, wherein the computer-readable instructions are stored in a computer-readable medium provided in the image processing apparatus.

27. A computer program according to claim 25, wherein the computer-readable instructions are downloaded from the network.

# FIG. 1

FIG. 1 — Block diagram showing system 100 comprising PRINTING CONTROL SECTION 102 and ENGINE SECTION 101.

EXTERNAL PC 126

HDD 118

NIC 124

PRINTING CONTROLLER 115

MEMORY 116

MAIN CONTROLLER 114

FLOW OF IMAGE DATA WHEN COPYING

DATA FORMAT CONVERTER 125

PRINTING CONTROL SECTION 102

FAX CONTROLLER 123 / EXT 123a

SCANNING CORRECTION UNIT 112

CL/BK COMP 113

CL/BK EXT 119

PRINTING CORRECTION UNIT 120

WRITING CONTROLLER 121

ENGINE CONTROLLER 110

SCANNING UNIT 111

IMAGE FORMING UNIT 122

OP UNIT 300

CPU BUS

RGB

ENGINE SECTION 101

FIG. 2

```
RGB ──► ┌─────────────────┐      RGB   ┌──────────────┐      RGB   ┌──────────────┐ ──► RGB
        │     201         │            │    202       │            │    203       │
        │ SCANNING GAMMA  │ ─────────► │ FILTERING    │ ─────────► │ SCALING UNIT │
        │ CORRECTION UNIT │            │   UNIT       │            │              │
        └─────────────────┘            └──────────────┘            └──────────────┘
```

112

## FIG. 3

300

| READY | | | | SET |
|---|---|---|---|---|
| | | | | 1 SHEET |

COPY

SCAN

FAX

| SINGLE COLOR | | BLACK & WHITE | FULL COLOR | AUTO BLACK & WHITE/COLOR |
|---|---|---|---|---|

| | | | | AUTO IMAGE DENSITY |
|---|---|---|---|---|

| | TEXT | PHOTO | AUTO TEXT/PHOTO |
|---|---|---|---|

| A4 | A4 | A3 | AUTO PAPER SELECT |
|---|---|---|---|

| BYPASS TRAY | | PAPER SIZE SETTING | 100% |
|---|---|---|---|

| CREATE | COLOR SETTING | FULL SIZE | REDUCE/ ENLARGE |
|---|---|---|---|

○ /CLEAR MODES  ○ PROGRAM

① ② ③
④ ⑤ ⑥
⑦ ⑧ ⑨
⊙ ⓪ #

START

○ CLEAR/ STOP

EP 1 580 976 A2

# FIG. 4

EP 1 580 976 A2

RGB → **COLOR CORRECTION UNIT** (401) → CMYK → **PRINTING GAMMA CORRECTION UNIT** (402) → CMYK 4 × 8 bit → **HALFTONE PROCESSING UNIT** (403) → CMYK 4 × 2 bit

120

# FIG. 5

ENGINE SECTION 101    PRINTING CONTROL SECTION 102

EP 1 580 976 A2

# FIG. 6

125

MAIN BUS 114

## DATA FORMAT CONVERTER

601       602       603       604       605       606

| INPUT PORT | → | EXTENSION UNIT | → | RESOLUTION CONVERTER | → | COLOR-SPACE CONVERTER | → | COMPRES-SION UNIT | → | OUTPUT PORT |

# FIG. 7

DATA FORMAT CONVERTER 125

DATA HAVING GENERAL DATA FORMAT

602       701       605

| EXTENSION UNIT (JPEG EXTENSION) | MULTI-VALUE DATA → | IMAGE PROCESSING UNIT | MULTI-VALUE DATA → | COMPRES-SION UNIT (JPEG COMPRES-SION) |

DATA HAVING GENERAL DATA FORMAT

EP 1 580 976 A2

FIG. 8

DATA FORMAT CONVERTER 125

DATA HAVING DEDICATED DATA FORMAT →

602 — EXTENSION UNIT (FIXED-LENGTH BLOCK EXTENSION)

MULTI-VALUE DATA →

701 — IMAGE PROCESSING UNIT

MULTI-VALUE DATA →

605 — COMPRESSION UNIT (JPEG COMPRESSION)

DATA HAVING GENERAL DATA FORMAT →

FIG. 9

DATA FORMAT CONVERTER 125

DATA HAVING DEDICATED DATA FORMAT →

602 — EXTENSION UNIT (FIXED-LENGTH BLOCK EXTENSION)

MULTI-VALUE DATA →

701 — IMAGE PROCESSING UNIT

MULTI-VALUE DATA →

605 — COMPRESSION UNIT (FIXED-LENGTH BLOCK COMPRESSION)

DATA HAVING DEDICATED DATA FORMAT →

# FIG. 10A

603

MULTI-VALUE DATA → | MAIN SCANNING DIRECTION RESOLUTION CONVERTING BLOCK (1001) | → | SUB-SCANNING DIRECTION RESOLUTION CONVERTING BLOCK (1002) | → MULTI-VALUE DATA

# FIG. 10B

1003  1003  1001

MULTI-VALUE DATA → FF → FF → ··· → FF → FF

1004 — FIRST INTERPOLATING PIXEL CALCULATOR → RESOLUTIONALLY-CONVERTED DATA

# FIG. 10C

1002

RESOLUTIONALLY-CONVERTED DATA →

SUB-SCANNING LINE STORING MEMORY — 1006

1007

ONE-LINE MEMORY (1005)
ONE-LINE MEMORY
ONE-LINE MEMORY
ONE-LINE MEMORY

→ SECOND INTER-POLATING PIXEL CALCU-LATOR → MULTI-VALUE DATA

# FIG. 11

EP 1 580 976 A2

# FIG. 12

```
        START
          │
          ▼
┌─────────────────────┐
│   INPUT PROCESS     │─── S1201
│ MODE INFORMATION    │
└─────────────────────┘
          │
          ▼
┌─────────────────────┐
│   SCAN ORIGINAL     │─── S1202
│  DOCUMENT IMAGE     │
└─────────────────────┘
          │
          ▼
┌─────────────────────┐
│  CONDUCT SCANNING   │─── S1203
│     CORRECTION      │
└─────────────────────┘
          │
          ▼
┌─────────────────────┐
│  STORE IMAGE DATA   │─── S1204
│ AND PROCESS MODE    │
│    INFORMATION      │
└─────────────────────┘
          │
          ▼
     ╱───────────╲  ─── S1205
    ╱  EXTERNAL PC ╲      NO
   ╱ REQUESTS IMAGE ╲──────────────────────┐
   ╲ DATA ACQUISITION?╱                     │
    ╲               ╱                        │
     ╲─────────────╱                         │
          │ YES                              │
          ▼                                  │
     ╱───────────╲  ─── S1206                │
    ╱  EXTERNAL PC ╲     NO                   │
   ╱  DESIGNATES    ╲─────────┐              │
   ╲ PROCESS MODE   ╱         │              │
    ╲ INFORMATION? ╱          │              │
     ╲───────────╱            │              │
          │ YES               │              │
   S1207  │            S1208  ▼              │
          ▼                                  │
┌─────────────────┐   ┌─────────────────┐    │
│  CONVERT DATA   │   │  CONVERT DATA   │    │
│ FORMAT ACCORDING│   │ FORMAT ACCORDING│    │
│ TO PROCESS MODE │   │ TO PROCESS MODE │    │
│  INFORMATION    │   │  INFORMATION    │    │
│ DESIGNATED BY   │   │   STORED IN     │    │
│  EXTERNAL PC    │   │   HARD DISK     │    │
└─────────────────┘   └─────────────────┘    │
          │                    │             │
          ▼◄───────────────────┘             │
┌─────────────────────┐                      │
│  TRANSMIT DATA-     │─── S1209             │
│ FORMAT-CONVERTED    │                      │
│  IMAGE DATA TO      │                      │
│   EXTERNAL PC       │                      │
└─────────────────────┘                      │
          │                                  │
          ▼◄─────────────────────────────────┘
        END
```

# FIG. 13

```
        ┌─────────────┐
        │    START    │
        └──────┬──────┘
               │
               ▼
     ┌──────────────────┐
     │ EXTEND IMAGE DATA │────── S1301
     └──────────┬───────┘
               │
               ▼
     ┌──────────────────┐
     │CONVERT RESOLUTION │────── S1302
     └──────────┬───────┘
               │
               ▼
     ┌──────────────────┐
     │     CONVERT       │
     │   COLOR-SPACE     │────── S1303
     └──────────┬───────┘
               │
               ▼
     ┌──────────────────┐
     │  COMPRESS IMAGE   │
     │      DATA         │────── S1304
     └──────────┬───────┘
               │
               ▼
        ┌─────────────┐
        │     END     │
        └─────────────┘
```

# FIG. 14

**DATA FORMAT CONVERTER** 1400

MAIN BUS 114

| 601 INPUT PORT | 602 EXTENSION UNIT | 603 RESOLUTION CONVERTER | 1401 RGB→sRGB CONVERTER | 1402 RGB→GRAY CONVERTER | 605 COMPRESSION UNIT | 606 OUTPUT PORT |

# FIG. 15

1500

| 1501 EXTENSION UNIT | 1502 RESOLUTION CONVERTER | 1503 RGB→GRAY CONVERTER | 1504 SPOT NOISE ELIMINATOR | 1505 FILTERING UNIT | 1506 CONCENTRATION GAMMA UNIT | 1507 BINARY-FORMATTING UNIT | 1508 COMPRESSION UNIT |

EXTERNAL PC 126

# FIG. 16

| | | | | |
|------|------|------|------|------|
| d00 | d01 | d02 | d03 | d04 |
| d10 | d11 | d12 | d13 | d14 |
| d20 | d21 | d22 | d23 | d24 |
| d30 | d31 | d32 | d33 | d34 |
| d40 | d41 | d42 | d43 | d44 |

# FIG. 17

STORED IMAGE DATA
AND ATTRIBUTES

100

HDD —118

DATA FORMAT
CONVERTER —1500

REQUESTING IMAGE
DATA AND ATTRIBUTES

~126

REQUESTING IMAGE
DATA AND ATTRIBUTES

~127

EP 1 580 976 A2